# EUROPEAN PATENT APPLICATION

(11) **EP 4 765 625 A1**
(43) Date of publication of application: **24.06.2026**
(21) Application number: 25820848.7
(22) Date of filing: 11.02.2025
(51) Int. Cl.: H02P 29/00, H02P 6/17

(54) **MOTOR CONTROL APPARATUS AND METHOD**

(30) Priority: 12.06.2024 US 202463659323 P
(71) Applicant: Delta Electronics, Inc., Taoyuan City 333 (TW)
(72) Inventor: CHEN, Chin-hao, Taoyuan City Taiwan 333 (TW); CHEN, Chien-yu, Taoyuan City Taiwan 333 (TW); HUANG, Min-lang, Taoyuan City Taiwan 333 (TW)
(74) Representative: Porta & Consulenti Associati S.p.A.
(86) International application number: PCT/CN2025/076871
(87) International publication number: WO 2025/256165

(57) **Abstract**

A motor control apparatus and method. The apparatus receives a feedback signal by means of a sensor; on the basis of the feedback signal, the apparatus calculates an angle of the position of a motor; the apparatus obtains a correction angle on the basis of the feedback signal or an input instruction; the apparatus calculates a current command value on the basis of the correction angle and the angle; and the apparatus outputs the current command value to the motor.

## Description

### BACKGROUND

### Field of Invention

The present disclosure relates to a motor control device and a method. More particularly, the present disclosure relates to a motor control device and a method based on a rotation angle of a motor.

### Description of Related Art

When controlling an alternating current (AC) motor, in order to control the motor's torque, the control circuit needs to control the motor's input current based on the rotation angle of the rotor within the motor. When the control circuit measures the rotation angle through a sensor installed within the motor, due to the limited resolution of the sensor's output signal, the control circuit must digitally control the motor's input current for each cycle.

However, in certain situations (for example: sensor installation deviation, flux-weakening control, or maximum torque per ampere (MTPA) control), the control circuit needs to delay or advance the motor's input current so as to correct the deviation or enable the motor to generate a higher amount of torque.

A conventional method achieves torque control through delaying the input current. However, if a sensor with a lower resolution and/or a lower accuracy is used to obtain feedback signals, torque control will also deviate when the motor's rotation speed changes.

For the foregoing reason, how to achieve an accurate motor control technology by using a lower-accuracy position sensor in consideration of the limited cost is an important goal that the industry is eager to achieve.

### SUMMARY

In order to resolve the above problem, a motor control device is provided. The motor control device includes a motor, a sensor, and a control circuit. The sensor is disposed within the motor. The control circuit is electrically connected to the motor and the sensor, and is configured to execute the following operations: receiving a feedback signal through the sensor; calculating an angle of a position of the motor based on the feedback signal; obtaining a correction angle based on the feedback signal or an input command; calculating a current command value based on the correction angle and the angle; and outputting the current command value to the motor.

The present disclosure provides a motor control method adapted for a motor. The motor control method includes the steps of: calculating an angle of a position of the motor based on a feedback signal of the motor; obtaining a correction angle based on the feedback signal or an input command; calculating a current command value based on the correction angle and the angle; and outputting the current command value to the motor.

It is to be understood that both the foregoing general description and the following detailed description are by examples, and are intended to provide further explanation of the disclosure as claimed.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain the principles of the present disclosure. In the drawings,
Fig. 1 depicts a schematic diagram of a motor control device according to a first embodiment of the present disclosure;
Fig. 2 depicts a schematic diagram of controlling a current of a motor by a motor control device by using a six-step current control method according to some embodiments of the present disclosure;
Fig. 3 depicts a schematic diagram of a delay control of an input current in the related art;
Fig. 4 depicts a schematic diagram of controlling a current of a motor by a control circuit by using a delay control in the related art;
Fig. 5 depicts a schematic diagram of controlling an input current by using an angle offset according to some embodiments of the present disclosure;
Fig. 6 depicts a schematic diagram of controlling a current of a motor by a motor control device by using an angle offset according to some embodiments of the present disclosure; and
Fig. 7 depicts a flowchart of a motor control method according to a second embodiment of the present disclosure.

### Description of Figure Numbers

1: motor control device
12: motor control device
14: motor
16: sensor
T1-T6: time intervals
CG: command generator
DC: delay control
CC: current command
IC: input current
CA: current angle
DA: delayed angle
IA: delay angle
SA: offset angle
200: motor control method
S201-S204: steps

### DESCRIPTION OF THE EMBODIMENTS

Reference will now be made in detail to the present embodiments of the disclosure, examples of which are illustrated in the accompanying drawings. However, the embodiments provided herein are intended as illustrative only since numerous modifications and variations therein will be apparent to those skilled in the art. Wherever possible, the same reference numbers are used in the drawings and the description to refer to the same or like parts for better understanding.

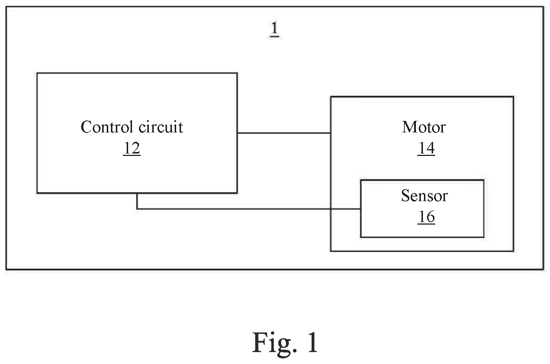

A description is provided with reference to Fig. 1. Fig. 1 depicts a schematic diagram of a motor control device 1 according to a first embodiment of the present disclosure. The motor control device 1 includes a control circuit 12, a motor 14, and a sensor 16. The control circuit 12 is electrically connected to the motor 14 and the sensor 16. The motor control device 1 is configured to control an input current of the motor 14.

In some embodiments, the control circuit 12 may include a central processing unit (CPU), a microcontroller unit (MCU), an application specific integrated circuit (ASIC), and/or a suitable arithmetic unit and discrete circuit.

The sensor 16 is disposed within the motor 14, and is configured to measure a rotation angle of a rotor of the motor 14. In some embodiments, the sensor 16 is a Hall sensor. The sensor 16 determines a current position of the rotor of the motor 14 through measuring changes of a magnetic field within the motor 14. The sensor 16 can be disposed on the rotor of the motor 14 or at a fixed position within the motor 14 (for example: on a stator).

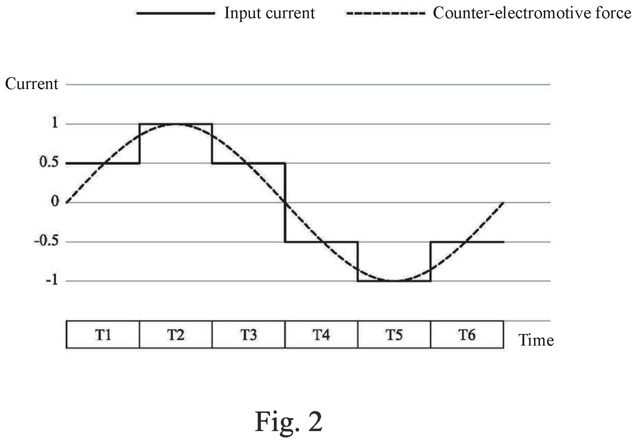

In some embodiments, the motor 14 is an AC motor, and the control circuit 12 generates a current command to control the input current of the motor 14 so as to control an output torque of the motor 14. A description is provided with reference to Fig. 2. Fig. 2 depicts a schematic diagram of controlling a current of the motor 14 by the motor control device 1 by using a six-step current control method.

As shown by the dotted line in Fig. 2, as the rotor of the motor 14 rotates, the rotor generates different counter-electromotive forces (counter emf) at different rotation angles. Correspondingly, based on a resolution of a signal returned by the sensor 16, the control circuit 12 respectively provides different input currents to the motor 14 during time intervals T1 to T6.

During the time interval T1, the control circuit 12 provides an input current of sin(30°). During the time interval T2, the control circuit 12 provides an input current of sin(90°). During the time interval T3, the control circuit 12 provides an input current of sin(150°). During the time interval T4, the control circuit 12 provides an input current of sin(210°). During the time interval T5, the control circuit 12 provides an input current of sin(270°). During the time interval T6, the control circuit 12 provides an input current of sin(330°).

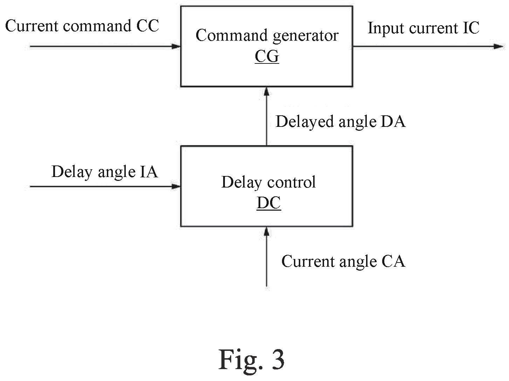

A description is provided with reference to Fig. 3. Fig. 3 depicts a schematic diagram of a delay control of an input current in the related art. In order to delay the input current of the motor, after the control circuit receives a current angle CA of the motor from the sensor, the control circuit delays a signal output through a delay control DC, and outputs a delayed angle DA. The delay control DC can determine a delay amount of the delayed angle DA based on a received delay angle IA.

Correspondingly, a command generator CG of the control circuit generates an input current IC of the motor based on a current command CC and the delayed angle DA.

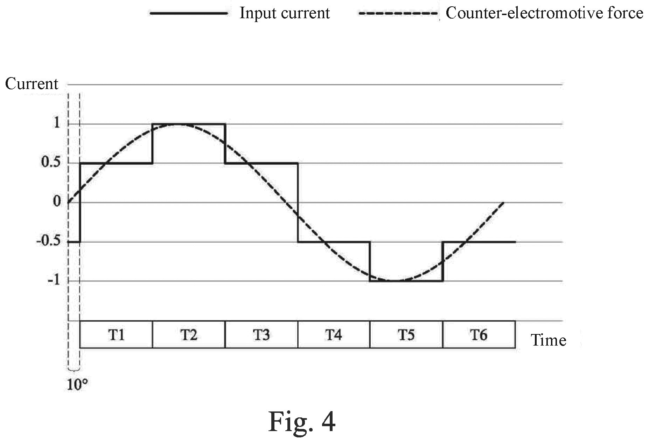

A description is provided with reference to Fig. 4. Fig. 4 depicts a schematic diagram of controlling a current of a motor by a control circuit by using a delay control in the related art. As shown in the figure, with the intervention of the delay control DC, the input current IC is delayed by 10° and then input to the motor as compared with the embodiment shown in Fig. 2. In other words, the sin(30°) input current, which is originally input when the rotation angle of the motor is from 0° to 60° (that is, the time interval T1 in Fig. 2), is delayed to be input until the rotation angle of the motor is from 10° to 70° (that is, the time interval T1 in Fig. 4).

In this example, when a certain angle offset is required, the control circuit needs to calculate a delay time, that is, how long the 10° interval in Fig. 4 should be delayed.

In certain examples, the control circuit estimates how long it will take to rotate 10° currently based on a previous rotation speed of the motor. However, this method can not accurately calculate the delay time when the rotation speed of the motor changes.

In view of the above technical problem, the motor control device 1 provided by the present disclosure adjusts an input current value of the motor 14 to achieve the delay control and/or a torque control.

In greater detail, the control circuit 12 executes the following operations: receiving a feedback signal through the sensor 16; calculating an angle of a position of the motor 14 based on the feedback signal; obtaining a correction angle based on the feedback signal or an input command; calculating a current command value based on the correction angle and the angle; and outputting the current command value to the motor 14.

In some embodiments, when the motor control device 1 calculates the angle of the position of the motor 14, the control circuit 12 calculates the rotation angle of the rotor within the motor 14 by using the feedback signal provided by the sensor 16, and uses the rotation angle as a reference for subsequent calculation of the current command value.

In greater detail, the operation of calculating the angle of the position of the motor by the control circuit 12 further includes: calculating a rotation angle of a rotor within the motor based on the feedback signal; and using the rotation angle as the angle.

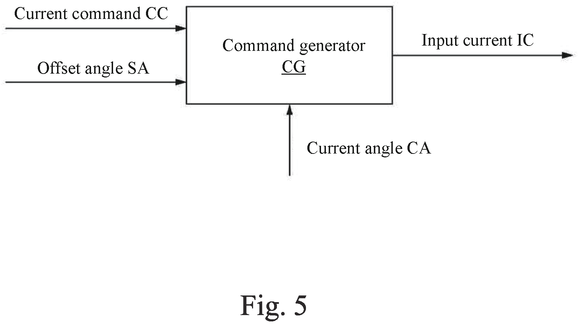

A description is provided with reference to Fig. 5. Fig. 5 depicts a schematic diagram of controlling an input current by using an angle offset according to some embodiments of the present disclosure. As shown in the figure, after receiving the current angle CA from the sensor 16, the command generator CG of the control circuit 12 combines an offset angle SA and the current command CC to generate the input current IC of the motor 14. The offset angle SA is the angle required to be adjusted for the delay control and/or the torque control.

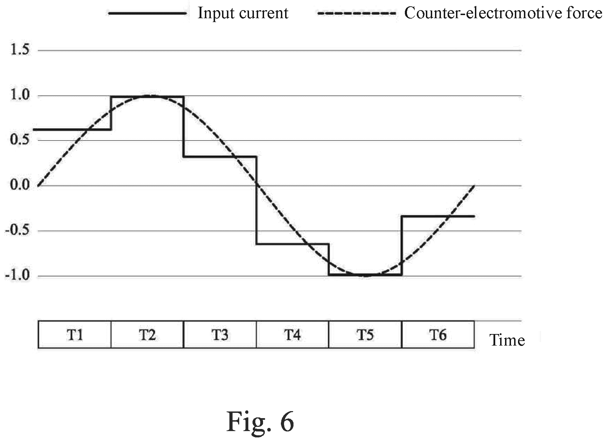

Based on the above embodiment, please refer to Fig. 6 for a schematic diagram of controlling a current of the motor 14 by the motor control device 1 by using an angle offset method. As compared with the embodiment shown in Fig. 2, Fig. 6 is the schematic diagram of the current after an offset of 10°.

In greater detail, during the time interval T1, the control circuit 12 provides an input current of sin(40°) (that is, sin(30°) is offset by 10°). During the time interval T2, the control circuit 12 provides an input current of sin(100°). During the time interval T3, the control circuit 12 provides an input current of sin(160°). During the time interval T4, the control circuit 12 provides an input current of sin(220°). During the time interval T5, the control circuit 12 provides an input current of sin(280°). During the time interval T6, the control circuit 12 provides an input current of sin(340°).

Accordingly, different from the embodiment shown in Fig. 4, the motor control device 1 does not need to calculate the delay time required for offsetting a specific angle, rather, it provides an offset current value in the original time intervals (that is, the time intervals T1 to T6 same as Fig. 2) and achieves the goal of angle offset.

It should be noted that the feedback signal provided by the sensor 16 depends on specifications of the sensor 16. In some embodiments, the feedback signal includes the rotation angle of the rotor, the input current, an input voltage, the output torque, and/or some other parameters of the motor 14. The motor control device 1 may calculate the correction angle in different ways based on different feedback signals. In some examples, the motor control device 1 combines a plurality of parameters to calculate the correction angle of the motor 14. For example, a current rotation state of the motor is determined based on the rotation angle of the rotor, and then parameters, such as current, voltage and/or torque, etc., are combined to calculate the correction angle so as to achieve a more accurate control.

It should be described that, in Fig. 2, Fig. 4, and Fig. 6, a current value range between positive and negative 1 is taken as an example, but the present disclosure is not limited thereto. In fact, the motor control device 1 can similarly provide the input current to the motor 14 within other current ranges. For example, the current value range is determined based on the current command CC correspondingly.

In addition, in Fig. 4 and Fig. 6, 10° delay and offset are respectively taken for example, but the present disclosure is not limited thereto. In fact, the motor control device 1 can also similarly provide the motor 14 with the input current that is delayed and/or offset to other angles. For example, the delayed and/or offset angle are determined based on the delayed angle DA or the offset angle SA. Additionally, since the present embodiment operates by changing the current command, a baseband current component can be advanced or delayed from the counter-electromotive force through different current commands.

It should be described that, in the present disclosure, the counter-electromotive force graph in a sinusoidal form is taken as an example (that is, Fig. 2, Fig. 4, and Fig. 6), but the present disclosure is not limited thereto. In other embodiments, if the counter-electromotive force in different graphs is generated when the motor 14 rotates, the motor control device 1 can still similarly make the baseband current component to be advanced or delayed from the counter-electromotive force.

In some embodiments, similar to the above embodiment, the sensor 16 is a Hall sensor, and the operation of receiving the feedback signal further includes: receiving the feedback signal corresponding to a cycle from the sensor 16. The control circuit 12 controls an input current of the motor within the cycle based on the current command value calculated by the feedback signal.

Take Fig. 6 for example. According to the specifications of the sensor 16, the sensor 16 measures and provides the feedback signal once to the control circuit 12 in each of the time intervals T1 to T6, and the control circuit 12 can adjust the input current once based on the feedback signal.

It should be described that the above cycle may be a fixed time cycle, a cycle during which the control circuit 12 controls the motor 14, a cycle during which the control circuit 12 performs a computation, and/or some other fixed or floating time interval. In practical applications, the motor control device 1 can adjust the cycle and frequency of the motor 14 depending on needs.

In some embodiments, the motor control device 1 calculates the current command value based on a plurality of angle intervals.

In greater detail, the operation of calculating the current command value by the control circuit 12 further includes: selecting a current interval from the plurality of angle intervals based on the angle; and calculating the current command value based on the current interval and the correction angle.

For example, when the control circuit 12 determines that the rotation angle of the motor 14 is within the interval from 0° to 60° based on the feedback signal provided by the sensor 16, the control circuit 12 uses 30° as a base angle, and then combines the base angle and the correction angle to calculate the current command value. Take the embodiment shown in Fig. 6 for example. During the time interval T1, the motor control device 1 calculates the current command value of sin(40°) based on the base angle of 30° and a correction angle of 10°.

Similarly, when the rotation angle of the motor 14 is within the interval from 60° to 120°, the control circuit 12 uses 90° as the base angle, which corresponds to the current command value of the time interval T2. When the rotation angle of the motor 14 is within the interval from 120° to 180°, the control circuit 12 uses 150° as the base angle, which corresponds to the current command value of the time interval T3. When the rotation angle of the motor 14 is within the interval from 180° to 240°, the control circuit 12 uses 210° as the base angle, which corresponds to the current command value of the time interval T4. When the rotation angle of the motor 14 is within the interval from 240° to 300°, the control circuit 12 uses 270° as the base angle, which corresponds to the current command value of the time interval T5. When the rotation angle of the motor 14 is within the interval from 300° to 360°, the control circuit 12 uses 330° as the base angle, which corresponds to the current command value of the time interval T6.

In some embodiments, in order to correct a feedback signal error, the motor control device 1 adjusts the input current of the motor 14 based on the said error.

In greater detail, the operation of obtaining the correction angle by the control circuit 12 further includes: generating the correction angle based on a signal error of the sensor corresponding to the feedback signal. The signal error is a difference between the angle and an actual angle.

For example, if the sensor 16 causes an error generated in the feedback signal due to its own signal transmission delay or installation position deviation, the control circuit 12 can generate the correction angle correspondingly based on the signal error, and output a correct current command accordingly.

In some embodiments, when the motor 14 is initially started or operating at a low speed, the motor control device 1 triggers a current angle offset operation to control a torque of the motor 14.

In greater detail, the operation of obtaining the correction angle by the control circuit 12 further includes: in response to a rotation speed of the motor being lower than a first rotation speed threshold, using an advance angle as the correction angle.

In some embodiments, when the rotation speed of the motor 14 exceeds a specific threshold, the motor control device 1 triggers the current angle offset operation to control the torque of motor 14.

In greater detail, the operation of obtaining the correction angle by the control circuit 12 further includes: in response to a rotation speed of the motor being higher than a second rotation speed threshold, calculating the correction angle based on the rotation speed, a target torque, and an input voltage of the motor.

When the motor 14 operates at a high speed, the counter-electromotive force inside the motor increases, it is thus difficult for the motor control device 1 to provide a higher current to allow the motor 14 to generate additional torque under the limitation of the existing specifications. Therefore, the motor control device 1 is able to calculate the offset angle based on a current rotation speed of the motor 14 and an expected torque (that is, the target torque) through magnetic field attenuation control.

In some embodiments, the motor control device 1 can further control the torque of the motor 14 through the maximum torque per ampere (MTPA) method.

In greater detail, the operation of obtaining the correction angle by the control circuit 12 further includes: performing a maximum torque per ampere computation based on a rotation speed of the motor and a target torque to generate the correction angle.

For example, the control circuit 12 calculates the offset angle based on the current rotation speed of the motor 14 and the required torque (that is, the target torque).

In some embodiments, the offset angle SA is written into a memory (not shown in the figure) or the command generator CG of the control circuit 12 in advance. For example, before manufacturing the motor control device 1, parameters of the motor 14 during operation are measured in advance, and the offset angle SA is calculated correspondingly and stored in the motor control device 1.

In some embodiments, the motor control device 1 further includes an input interface. The input interface is communicatively connected to the control circuit 12. The input interface is configured to receive the input command.

For example, the input interface is a device, such as a keyboard, a mouse, a touch screen, a mobile device, etc., and a user can operate the input interface to directly input the correction angle, input the target torque, or input other command to instruct the motor control device 1 to control the motor 14.

In some embodiments, when the input command is the correction angle, the motor control device 1 is able to directly calculate the current command value based on the correction angle.

In some embodiments, when the input command is the target torque, the motor control device 1 is able to calculate the current command value through, for example, magnetic field attenuation control or the maximum torque per ampere method.

In greater detail, the input command includes a target torque, and the operation of obtaining the correction angle by the control circuit 12 further includes: calculating the correction angle based on the target torque of the input command.

In summary, the motor control device 1 provided by the present disclosure determines the rotation angle of the motor 14 based on the feedback signal of the sensor 16, and further calculates the offset correction angle depending on needs and generates the corresponding current command value. Accordingly, the motor control device 1 is able to control the torque output of the motor 14 and/or correct errors. In addition to that, as compared with delaying the output current, the motor control device 1 can ignore the change of the rotation speed by operating with using the offset angle so as to control the input current of the motor 14 more accurately.

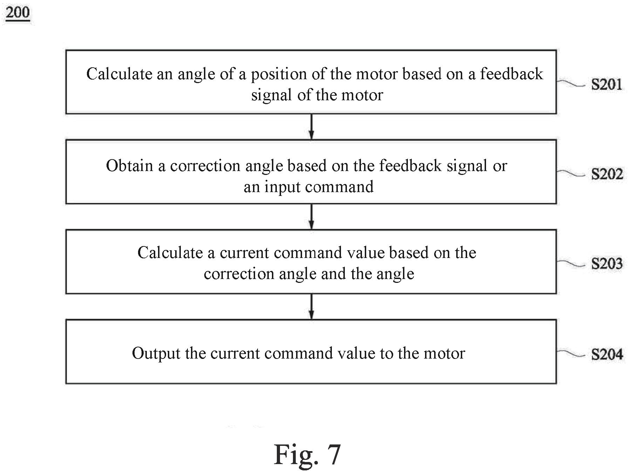

A description is provided with reference to Fig. 7. Fig. 7 depicts a flowchart of a motor control method 200 according to a second embodiment of the present disclosure. The motor control method 200 includes steps S201 to S204. The motor control method 200 is adapted for a motor, and is configured to control an input current of the motor. The motor control method 200 can be executed by an electronic device (such as the motor control device 1 in the first embodiment).

First, in step S201, the electronic device calculates an angle of a position of the motor based on a feedback signal of the motor.

Then, in step S202, the electronic device obtains a correction angle based on the feedback signal or an input command.

Next, in step S203, the electronic device calculates a current command value based on the correction angle and the angle.

Finally, in step S204, the electronic device outputs the current command value to the motor.

In some embodiments, the motor includes a sensor. The sensor is a Hall sensor, and the motor control method 200 further includes: receiving the feedback signal corresponding to a cycle from the sensor by the electronic device. The motor controls an input current of the motor within the cycle based on the current command value calculated by the feedback signal.

In some embodiments, step S201 further includes the electronic device calculating a rotation angle of a rotor within the motor based on the feedback signal; and the electronic device using the rotation angle as the angle.

In some embodiments, the motor includes a sensor, and step S202 further includes the electronic device generating the correction angle based on a signal error of the sensor corresponding to the feedback signal. The signal error is a difference between the angle and an actual angle.

In some embodiments, step S202 further includes the electronic device using an advance angle as the correction angle in response to a rotation speed of the motor being lower than a first rotation speed threshold.

In some embodiments, step S202 further includes the electronic device calculating the correction angle based on a rotation speed, a target torque, and an input voltage of the motor in response to the rotation speed of the motor being higher than a second rotation speed threshold.

In some embodiments, step S202 further includes the electronic device performing a maximum torque per ampere computation based on a rotation speed of the motor and a target torque to generate the correction angle.

In some embodiments, the input command includes a target torque, and step S202 further includes the electronic device calculating the correction angle based on the target torque of the input command.

In some embodiments, step S203 further includes the electronic device selecting a current interval from a plurality of angle intervals based on the angle; and the electronic device calculating the current command value based on the current interval and the correction angle.

In some embodiments, the motor control method 200 further includes the electronic device receiving the input command from an input interface.

In summary, the motor control method 200 provided by the present disclosure determines the rotation angle of the motor based on the feedback signal, and further calculates the offset correction angle depending on needs and generates the corresponding current command value. Accordingly, the motor control method 200 is able to control the torque output of the motor and/or correct errors. In addition, as compared with delaying the output current, the motor control method 200 can ignore the change of the rotation speed by operating with using the offset angle so as to control the input current of the motor more accurately.

While several embodiments have been described in detail above as examples, the motor control device and method provided by the present disclosure may also be implemented by using other systems, hardware, software, storage media, or any combination thereof. Therefore, the scope of protection of the present disclosure should not be limited to the specific implementation methods described in the embodiments of the present disclosure, but should be determined by the appended claims.

It will be apparent to those skilled in the art that various modifications and variations can be made to the structure of the present disclosure without departing from the scope or spirit of the present disclosure. In view of the foregoing, it is intended that the present disclosure cover modifications and variations of this disclosure provided they fall within the scope of the following claims and their equivalents.

## Claims

1. A motor control device comprising:
a motor;
a sensor disposed within the motor; and
a control circuit electrically connected to the motor and the sensor, and being configured to execute the following operations:
receiving a feedback signal through the sensor;
calculating an angle of a position of the motor based on the feedback signal;
obtaining a correction angle based on the feedback signal or an input command;
calculating a current command value based on the correction angle and the angle; and
outputting the current command value to the motor.

2. The motor control device of claim 1, wherein the sensor is a Hall sensor, and the operation of receiving the feedback signal further comprises:
receiving the feedback signal corresponding to a cycle from the sensor, wherein the control circuit controls an input current of the motor within the cycle based on the current command value calculated by the feedback signal.

3. The motor control device of claim 1, wherein the operation of calculating the angle of the position of the motor further comprises:
calculating a rotation angle of a rotor within the motor based on the feedback signal; and
using the rotation angle as the angle.

4. The motor control device of claim 1, wherein the operation of obtaining the correction angle further comprises:
generating the correction angle based on a signal error of the sensor corresponding to the feedback signal, wherein the signal error is a difference between the angle and an actual angle.

5. The motor control device of claim 1, wherein the operation of obtaining the correction angle further comprises:
using an advance angle as the correction angle in response to a rotation speed of the motor being lower than a first rotation speed threshold.

6. The motor control device of claim 1, wherein the operation of obtaining the correction angle further comprises:
in response to a rotation speed of the motor being higher than a second rotation speed threshold, calculating the correction angle based on the rotation speed, a target torque, and an input voltage of the motor.

7. The motor control device of claim 1, wherein the operation of obtaining the correction angle further comprises:
performing a maximum torque per ampere computation based on a rotation speed of the motor and a target torque to generate the correction angle.

8. The motor control device of claim 1, wherein the input command comprises a target torque, and the operation of obtaining the correction angle further comprises:
calculating the correction angle based on the target torque of the input command.

9. The motor control device of claim 1, wherein the operation of calculating the current command value further comprises:
selecting a current interval from a plurality of angle intervals based on the angle; and
calculating the current command value based on the current interval and the correction angle.

10. The motor control device of claim 1, further comprising:
an input interface communicatively connected to the control circuit, and being configured to receive the input command.

11. A motor control method adapted for a motor comprising the steps of:
calculating an angle of a position of the motor based on a feedback signal of the motor;
obtaining a correction angle based on the feedback signal or an input command;
calculating a current command value based on the correction angle and the angle; and
outputting the current command value to the motor.

12. The motor control method of claim 11, wherein the motor comprises a sensor, the sensor is a Hall sensor, and the motor control method further comprises:
receiving the feedback signal corresponding to a cycle from the sensor, wherein the motor controls an input current of the motor within the cycle based on the current command value calculated by the feedback signal.

13. The motor control method of claim 11, wherein the step of calculating the angle of the position of the motor further comprises:
calculating a rotation angle of a rotor within the motor based on the feedback signal; and
using the rotation angle as the angle.

14. The motor control method of claim 11, wherein the motor comprises a sensor, and the step of obtaining the correction angle further comprises:
generating the correction angle based on a signal error of the sensor corresponding to the feedback signal, wherein the signal error is a difference between the angle and an actual angle.

15. The motor control method of claim 11, wherein the step of obtaining the correction angle further comprises:
using an advance angle as the correction angle in response to a rotation speed of the motor being lower than a first rotation speed threshold.

16. The motor control method of claim 11, wherein the step of obtaining the correction angle further comprises:
in response to a rotation speed of the motor being higher than a second rotation speed threshold, calculating the correction angle based on the rotation speed, a target torque, and an input voltage of the motor.

17. The motor control method of claim 11, wherein the step of obtaining the correction angle further comprises:
performing a maximum torque per ampere computation based on a rotation speed of the motor and a target torque to generate the correction angle.

18. The motor control method of claim 11, wherein the input command comprises a target torque, and the step of obtaining the correction angle further comprises:
calculating the correction angle based on the target torque of the input command.

19. The motor control method of claim 11, wherein the step of calculating the current command value further comprises:
selecting a current interval from a plurality of angle intervals based on the angle; and
calculating the current command value based on the current interval and the correction angle.

20. The motor control method of claim 11, further comprising:
receiving the input command from an input interface.
